# EUROPEAN PATENT APPLICATION

(11) **EP 4 734 443 A1**
(43) Date of publication of application: **29.04.2026**
(21) Application number: 23942683.6
(22) Date of filing: 25.06.2023
(51) Int. Cl.: H04L 9/40

(54) **DIGITAL VEHICLE KEY SHARING METHOD AND APPARATUS AND STORAGE MEDIUM**

(71) Applicant: Beijing Xiaomi Mobile Software Co., Ltd., Beijing 100085 (CN)
(72) Inventor: CHEN, Wenxuan, Beijing 100085 (CN)
(74) Representative: Stöckeler, Ferdinand
(86) International application number: PCT/CN2023/102219
(87) International publication number: WO 2025/000152

(57) **Abstract**

The present disclosure provides a digital vehicle key sharing method and apparatus and a storage medium. The method comprises: sending a request message to a cloud server of a vehicle, wherein the request message is used for requesting to initiate digital vehicle key sharing; receiving a first CSR returned by the cloud server; signing the first CSR on the basis of a private key of a vehicle key certificate of a vehicle owner device to obtain a first certificate, wherein the first certificate comprises digital vehicle key information shared by the vehicle owner device to a friend-end device; and storing the first certificate to the cloud server. According to the present disclosure, the asynchronization of vehicle key certificate sharing is realized, so that the digital vehicle key is asynchronously shared to the friend-end device, thereby increasing the sharing success rate of the digital vehicle key, and achieving high availability.

## Description

### FIELD

The present disclosure relates to the field of communication technologies, and more particularly to a method and a device for sharing a digital vehicle key, and a storage medium.

### BACKGROUND

At present, with the popularity of a digital vehicle key, a vehicle owner may share the digital vehicle key with his/her friend's terminal, i.e., with a peer device, via a terminal held by the vehicle owner, i.e., a vehicle owner device. However, in this process, it is necessary to keep synchronization between the vehicle owner device and the peer device at all times, otherwise it will easily lead to the failure of digital vehicle key sharing. Obviously, the process of sharing the digital vehicle key needs to be optimized.

### SUMMARY

In order to overcome the problems existing in the related art, embodiments of the present disclosure provides a method and a device for a sharing digital vehicle key, and a storage medium.

According to embodiments of a first aspect of the present disclosure, there is provided a method for sharing a digital vehicle key, which is performed by an vehicle owner device and includes: sending a request message to a cloud server of a vehicle, where the request message is configured to request to initiate digital vehicle key sharing; receiving a first certificate signing request (CSR) returned by the cloud server; signing the first CSR based on a private key of a vehicle key certificate of the vehicle owner device to obtain a first certificate, where the first certificate includes digital vehicle key information shared by the vehicle owner device to a peer device; and storing the first certificate in the cloud server.

According to embodiments of a second aspect of the present disclosure, there is provided a method for sharing a digital vehicle key, which is performed by a cloud server of a vehicle and includes: in response to receiving a request message sent by a vehicle owner device, sending a first certificate signing request (CSR) to the vehicle owner device, where the request message is configured to request to initiate digital vehicle key sharing; receiving and storing a first certificate returned by the vehicle owner device, where the first certificate is obtained by signing the first CSR based on a private key of a vehicle key certificate of the vehicle owner device, and the first certificate includes digital vehicle key information shared by the vehicle owner device to a peer device; in response to receiving a reception request message sent by the peer device, signing a second CSR contained in the reception request message based on a private key of the first certificate to obtain a second certificate of the peer device, where the reception request message is configured to receive a digital vehicle key shared by the vehicle owner device; and sending the first certificate and the second certificate to the peer device, and/or sending the first certificate and the second certificate to the vehicle.

Optionally, the method further includes: generating a public key of the first certificate and the private key of the first certificate; and signing the public key of the first certificate and business information based on the private key of the first certificate to obtain the first CSR.

Optionally, before obtaining the second certificate, the method further includes: verifying an identity of the peer device, where a verification result is successful
Optionally, sending the first certificate and the second certificate to the vehicle includes: sending the first certificate and the second certificate to the vehicle through network connection with the vehicle.

According to embodiments of a third aspect of the present disclosure, there is provided a method for sharing a digital vehicle key, which is performed by a peer device and includes: sending a reception request message carrying a second certificate signing request (CSR) to a cloud server of a vehicle, where the reception request message is configured to receive a digital vehicle key shared by a vehicle owner device; and receiving and storing a second certificate of the peer device and a first certificate sent by the cloud server, where the first certificate is a digital vehicle key certificate pre-stored in the cloud server by the vehicle owner device, the first certificate includes digital vehicle key information shared by the vehicle owner device to the peer device, and the second certificate is a digital vehicle key certificate obtained by the cloud server signing the second CSR based on a private key of the first certificate.

Optionally, the method further includes: sending the first certificate and the second certificate to the vehicle by short-range communication.

According to embodiments of a fourth aspect of the present disclosure, there is provided a method for sharing a digital vehicle key, which is performed by a vehicle and includes: receiving a second certificate of a peer device and a first certificate, where the first certificate is a digital vehicle key certificate pre-stored in a cloud server of the vehicle by a vehicle owner device, and the first certificate includes digital vehicle key information shared by the vehicle owner device to the peer device; verifying the first certificate based on a vehicle key certificate of the vehicle owner device; and after the first certificate passes verification, verifying the second certificate based on the first certificate to determine whether the second certificate is a trusted certificate.

Optionally, receiving the second certificate of the peer device and the first certificate includes: receiving the first certificate and the second certificate sent by the cloud server through network connection between the cloud server and the vehicle; and/or receiving the first certificate and the second certificate sent by the peer device through short-range communication.

According to embodiments of a fifth aspect of the present disclosure, there is provided a device for sharing a digital vehicle key, which is for a vehicle owner device and includes: a first sending module configured to send a request message to a cloud server of a vehicle, where the request message is configured to request to initiate digital vehicle key sharing; a first receiving module configured to receive a first certificate signing request (CSR) returned by the cloud server; a first signing module configured to sign the first CSR based on a private key of a vehicle key certificate of the vehicle owner device to obtain a first certificate, where the first certificate includes digital vehicle key information shared by the vehicle owner device to a peer device; and a second sending module configured to store the first certificate in the cloud server.

According to embodiments of a sixth aspect of the present disclosure, there is provided a device for sharing a digital vehicle key, which is for a cloud server of a vehicle and includes: a third sending module configured to send a first certificate signing request (CSR) to a vehicle owner device in response to receiving a request message sent by the vehicle owner device, where the request message is configured to request to initiate digital vehicle key sharing; a second receiving module configured to receive and store a first certificate returned by the vehicle owner device, where the first certificate is obtained by signing the first CSR based on a private key of a vehicle key certificate of the vehicle owner device, and the first certificate includes digital vehicle key information shared by the vehicle owner device to a peer device; a second signing module configured to, in response to receiving a reception request message sent by the peer device, sign a second CSR contained in the reception request message based on a private key of the first certificate to obtain a second certificate of the peer device, where the reception request message is configured to receive a digital vehicle key shared by the vehicle owner device; and a fourth sending module configured to send the first certificate and the second certificate to the peer device, and/or send the first certificate and the second certificate to the vehicle.

According to embodiments of a seventh aspect of the present disclosure, there is provided a device for sharing a digital vehicle key, which is for a peer device and includes: a fifth sending module configured to send a reception request message carrying a second certificate signing request (CSR) to a cloud server of a vehicle, where the reception request message is configured to receive a digital vehicle key shared by a vehicle owner device; and a third receiving module configured to receive and store a second certificate of the peer device and a first certificate sent by the cloud server, where the first certificate is a digital vehicle key certificate pre-stored in the cloud server by the vehicle owner device, the first certificate includes digital vehicle key information shared by the vehicle owner device to the peer device, and the second certificate is a digital vehicle key certificate obtained by the cloud server signing the second CSR based on a private key of the first certificate.

According to embodiments of an eighth aspect of the present disclosure, there is provided a device for sharing a digital vehicle key, which is for a vehicle and includes: a fourth receiving module configured to receive a second certificate of a peer device and a first certificate, where the first certificate is a digital vehicle key certificate pre-stored in a cloud server of the vehicle by a vehicle owner device, and the first certificate includes digital vehicle key information shared by the vehicle owner device to the peer device; a first verifying module configured to verify the first certificate based on a vehicle key certificate of the vehicle owner device; and a second verifying module configured to verify the second certificate based on the first certificate after the first certificate passes verification, to determine whether the second certificate is a trusted certificate.

According to embodiments of a ninth aspect of the present disclosure, there is provided a system for sharing a digital vehicle key, which includes: a vehicle owner device configured to perform the method for sharing the digital vehicle key on the side of the vehicle owner device; a cloud server of a vehicle configured to perform the method for sharing the digital vehicle key described one the side of the cloud server; a peer device configured to perform the method for sharing the digital vehicle key on the side of the peer device; and a vehicle configured to perform the method for sharing the digital vehicle key on the side of the vehicle side.

According to embodiments of a tenth aspect of the present disclosure, there is provided a computer-readable storage medium, which stores a computer program, and the computer program is configured to perform the method for sharing the digital vehicle key described in any one of the above embodiments.

According to embodiments of an eleventh aspect of the present disclosure, there is provided a device for sharing a digital vehicle key, which includes: a processor; and a memory configured to store instructions executable by the processor. The processor is configured to perform the method for sharing the digital vehicle key described in any one of the above embodiments.

The technical scheme provided by the embodiments of the present disclosure may include the following beneficial effects.

According to the present disclosure, the asynchronous sharing of the vehicle key certificate is realized, and the digital vehicle key may be asynchronously shared to the peer device, so that the sharing success rate of the digital vehicle key is improved, and the usability is high.

It is to be understood that both the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of the specification, illustrate embodiments consistent with the present disclosure and together with the description, serve to explain the principles of the present disclosure.
Fig. 1 is a schematic flowchart of a method for sharing a digital vehicle key according to an illustrative embodiment.
Fig. 2 is a flowchart of a method for sharing a digital vehicle key according to an illustrative embodiment.
Fig. 3 is a flowchart of another method for sharing a digital vehicle key according to an illustrative embodiment.
Fig. 4 is a flowchart of another method for sharing a digital vehicle key according to an illustrative embodiment.
Fig. 5 is a flowchart of another method for sharing a digital vehicle key according to an illustrative embodiment.
Fig. 6 is a schematic architecture diagram of a system for sharing a digital vehicle key according to an illustrative embodiment.
Fig. 7 is a flowchart of another method for sharing a digital vehicle key according to an illustrative embodiment.
Fig. 8 is a block diagram of a device for sharing a digital vehicle key according to an illustrative embodiment.
Fig. 9 is a block diagram of another device for sharing a digital vehicle key according to an illustrative embodiment.
Fig. 10 is a block diagram of another device for sharing a digital vehicle key according to an illustrative embodiment.
Fig. 11 is a block diagram of another device for sharing a digital vehicle key according to an illustrative embodiment.
Fig. 12 is a schematic diagram of a device for sharing a digital vehicle key according to an illustrative embodiment of the present disclosure.
Fig. 13 is a schematic diagram of another device for sharing a digital vehicle key according to an illustrative embodiment of the present disclosure.
Fig. 14 is a schematic diagram of another device for sharing a digital vehicle key according to an illustrative embodiment of the present disclosure.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present disclosure. Rather, they are merely examples of devices and methods consistent with some aspects of the present disclosure as detailed in the appended claims.

The terms used in the present disclosure are for the purpose of describing specific embodiments only and are not intended to limit the present disclosure. The singular forms "a", "the" and "said" used in the present disclosure and the appended claims are also intended to include the plural forms, unless the context clearly indicates other meaning. It should also be understood that the term "and/or" as used herein refers to and includes any or all possible combinations of at least one associated listed item.

It should be understood that although the terms first, second, third, etc. may be used to describe various messages in the present disclosure, these messages should not be limited to these terms. These terms are only used to distinguish messages of the same type from each other. For example, a first message may also be called a second message without departing from the scope of the present disclosure, and similarly, a second message may also be called a first message. Depending on the context, the word "if" as used herein may be interpreted as "when" or "while" or "in response to determining".

In the embodiments of the present disclosure, the essence of a digital vehicle key may be understood as a public key certificate, and the process of sharing the digital vehicle key is the process of signing and issuing the certificate. However, when a vehicle owner device shares the digital vehicle key with a peer device, it needs to use a vehicle key certificate of the vehicle owner device to sign a certificate request of the peer device. For a vehicle, since it has trusted the vehicle key certificate of the vehicle owner device, a vehicle key certificate of the peer device signed and issued by the vehicle owner device will also be trusted by the vehicle and become a legal vehicle key.

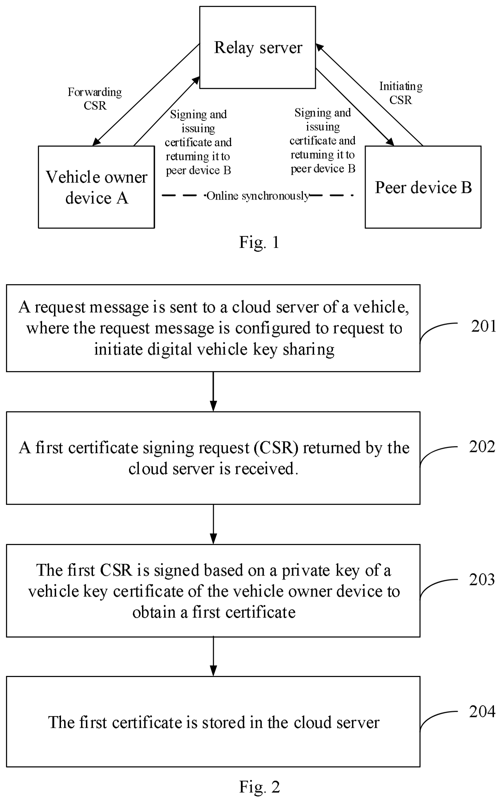

For example, the process of sharing the digital vehicle key is shown in Fig. 1, which involves a vehicle owner device A, a relay server and a peer device B. The vehicle owner device A refers to a terminal held by the vehicle owner, the peer device B refers to a terminal held by a friend, and the vehicle owner device A may share the digital vehicle key with the peer device B. The relay server may be a server provided by a vehicle manufacturer or a server provided by terminal manufacturers of the vehicle owner device A and the peer device B, which is not limited by the present disclosure.

In the process of sharing digital vehicle keys, the vehicle owner device A signs and issues the vehicle key certificate of the peer device B based on the vehicle key certificate, which is a synchronous process, and the trust relationship needs to be established by the vehicle owner device A directly signing and issuing the certificate of the peer device B.

This process includes that the peer device B initiates a certificate signing request (CSR), and the CSR is signed by the vehicle owner device A and then returned to the peer device B. This is a long-link process with multi-step interaction, and the technology required for the synchronization of the sharing actions between the two parties is very complicated. When the vehicle owner device A initiates the sharing of the digital vehicle key, the peer device B may be offline, and there needs to be a mechanism to trigger the peer device B so that the peer device B may generate the CSR and send it to the relay server. After the CSR generated by the peer device reaches the relay server, the vehicle owner device A needs to be notified or the vehicle owner device A needs to wait for polling continuously, so that the vehicle owner device A may pull the CSR from the relay server, sign the CSR locally in the vehicle owner device A and upload the CSR to the relay server, and then the peer device B is notified or the peer device B needs to wait for polling continuously, so as to retrieve the signed certificate.

In the embodiments of the present disclosure, a device being offline means that the device cannot establish unidirectional or bidirectional connection with a device server, or there is no other effective communication mode between the device and the device server. If the peer device B is offline, the peer device B cannot establish unidirectional or bidirectional connection with the device server, or there is no effective communication mode between the peer device B and the device server.

In addition, if the vehicle owner device A and the peer device B belong to different brand manufacturers, the above process needs to involve the corresponding interfaces between servers of different manufacturers, or use the cloud server on the side of the vehicle as a real-time relay. In any case, the tolerance space for a reaching rate and a time delay of sharing the digital vehicle key is small, resulting in a high failure rate of sharing the digital vehicle key and hence poor user experience.

In order to solve the above technical problems, the present disclosure provides the following methods for sharing the digital vehicle key, which may realize the asynchronous sharing of the vehicle key certificate, so as to share the digital vehicle key to the peer device asynchronously, so that the vehicle owner device and the peer device do not need to be online synchronously, thus improving the success rate of sharing the digital vehicle key and providing high usability.

Next, the method for sharing the digital vehicle key provided by the present disclosure will be introduced from the side of the vehicle owner device.

An embodiment of the present disclosure provides a method for sharing a digital vehicle keys, referring to Fig. 2, which is a flowchart of a method for sharing a digital vehicle key according to an embodiment. The method may be performed by a vehicle owner device, the vehicle owner device refers to a terminal held by a vehicle owner, including but not limited to a smart phone, a notebook computer, a desktop computer, a tablet computer, a smart wearable device, etc., and the method may include the following steps.

In step 201, a request message is sent to a cloud server of a vehicle, where the request message is configured to request to initiate digital vehicle key sharing.

In an embodiment of the present disclosure, the vehicle owner device has been successfully paired with the vehicle in advance, that is, the vehicle determines that the vehicle owner device is a trusted device, and the vehicle incorporates a vehicle key certificate of the vehicle owner device into a trusted certificate library of the vehicle.

In an embodiment of the present disclosure, the vehicle owner device sends the request message to the cloud server of the vehicle in a case that the digital vehicle key needs to be shared with the peer device.

In step 202, a first certificate signing request (CSR) returned by the cloud server is received.

In an embodiment of the present disclosure, after receiving the request message, the cloud server may generate a private key of a first certificate and a public key of the first certificate, and sign the public key of the first certificate and business information based on the private key of the first certificate to obtain the first CSR. The business information includes, but is not limited to, business information related to sharing the digital vehicle key.

The vehicle owner device may receive the first CSR returned by the cloud server based on the request message.

In step 203, the first CSR is signed based on a private key of a vehicle key certificate of the vehicle owner device to obtain a first certificate.

In an embodiment of the present disclosure, the vehicle owner device may sign the first CSR based on the private key of its own vehicle key certificate to obtain the first certificate. The first certificate includes digital vehicle key information shared by the vehicle owner device to the peer device.

In a possible implementation, the first certificate may include a maximum set of permissions, which are granted by the vehicle owner device, of a second certificate of the peer device signed and issued by the first certificate.

For example, the maximum set of permissions includes a plurality of permissions of the vehicle owner device, that is, the permissions owned by the vehicle owner device are granted to the peer device.

For example, in order to reduce security risks, the maximum set of permissions includes part of the permissions owned by the vehicle owner device, which do not involve control operations of an engine. For example, the maximum set of permissions includes opening a vehicle door, opening a trunk and so on.

In an embodiment of the present disclosure, since the first CSR comes from the cloud server, it includes the relevant information of the cloud server, and the first certificate is obtained by the vehicle owner device signing the first CSR based on the private key of its own vehicle key certificate. For example, the vehicle owner device may add additional service expansion information when signing the first CSR, the service expansion information is related to the digital vehicle key sharing process, and the content of the service expansion information is not limited in the present disclosure. Therefore, the first certificate includes not only the relevant information of the cloud server, but also the relevant information of the vehicle owner device, such as the digital vehicle key information shared by the vehicle owner device to the peer device.

In a possible implementation, the first certificate may include a maximum set of permissions, which are granted by the vehicle owner device, of a second certificate of the peer device signed and issued by the first certificate.

For example, the maximum set of permissions includes a plurality of permissions of the vehicle owner device, that is, the permissions owned by the vehicle owner device are granted to the peer device.

For example, in order to reduce security risks, the maximum set of permissions includes part of the permissions owned by the vehicle owner device, which do not involve control operations of an engine. For example, the maximum set of permissions includes opening a vehicle door, opening a trunk and so on.

In step 204, the first certificate is stored in the cloud server.

In an embodiment of the present disclosure, the vehicle owner device may store the first certificate obtained in the above steps in the cloud server, and this process only involves the interaction between the vehicle owner device and the cloud server, without the need for the peer device to be online synchronously.

In a possible embodiment, any one or more of the above steps 201 to 203 and the step of storing the first certificate in the cloud server may be performed when the peer device is offline.

In some optional embodiments, further, when the peer device is online, a reception request message may be sent to the cloud server, the reception request message is used to receive the digital vehicle key shared by the vehicle owner device, and the reception request message carries a second CSR initiated by the peer device. The peer device being online means that the peer device may establish unidirectional or bidirectional connection with the device server, or the connection between the peer device and the device server is established through an effective communication mode.

In this case, the cloud server may immediately respond to the reception request message of the peer device and sign the second CSR based on the private key of the first certificate, thus obtaining a second certificate of the peer device. In an example, after receiving the reception request message of the peer device, the cloud server may verify an identity of the peer device, and if a verification result is successful, sign the second CSR contained in the reception request message based on the private key of the first certificate, to obtain the second certificate of the peer device.

Further, the cloud server may send the first certificate and the second certificate to the peer device, and/or send the first certificate and the second certificate to the vehicle.

In an example, the cloud server may send the first certificate and the second certificate to the peer device through network connection with the peer device.

In an example, the cloud server may send the first certificate and the second certificate to the vehicle through network connection with the vehicle.

In an example, the cloud server may send the first certificate and the second certificate to the peer device through network connection with the peer device, and send the first certificate and the second certificate to the vehicle through network connection with the vehicle.

In an embodiment of the present disclosure, the first certificate is a digital vehicle key certificate pre-stored in the cloud server by the vehicle owner device, and the first certificate includes digital vehicle key information shared by the vehicle owner device to the peer device.

In a possible implementation, the first certificate may include a maximum set of permissions, which are granted by the vehicle owner device, of a second certificate of the peer device signed and issued by the first certificate.

For example, the maximum set of permissions includes a plurality of permissions of the vehicle owner device, that is, the permissions owned by the vehicle owner device are granted to the peer device.

For example, in order to reduce security risks, the maximum set of permissions includes part of the permissions owned by the vehicle owner device, which do not involve control operations of an engine. For example, the maximum set of permissions includes opening a vehicle door, opening a trunk and so on.

In an embodiment of the present disclosure, the second certificate is a digital vehicle key certificate obtained by the cloud server signing the second CSR based on the private key of the first certificate.

In an example, after the cloud server has sent the first certificate and the second certificate to the vehicle through the network connection with the vehicle, and the vehicle has completed the authentication of the second certificate, that is, the second certificate has been included in the trusted certificate library, it may be further determined whether the peer device is a trusted device.

The peer device stores the first certificate and the second certificate, and when the peer device approaches the vehicle, it may use a private key of the stored second certificate for encryption and/or signing operations to complete the authentication with the vehicle, and control the vehicle to perform corresponding operations based on a successful authentication result, for example, controlling the vehicle to open or close the door, start or stop the engine, open or close the window, etc.

In another example, after receiving and storing the first certificate and the second certificate, the peer device may send the first certificate and the second certificate to the vehicle through short-range communication when it approaches the vehicle, so that the vehicle may verify whether the second certificate is a trusted certificate, and subsequently may verify whether the peer device is a trusted device. The short-range communication includes, but is not limited to, Bluetooth, infrared, NFC, ZigBee, etc.

After the vehicle verifies that the second certificate is the trusted certificate, the second certificate may also be included in the trusted certificate library. After the vehicle determines that the peer device is the trusted device, the peer device may perform encryption and/or signing operations through the private key of the second certificate to complete the authentication with the vehicle, and control the vehicle to perform the corresponding operations based on the successful authentication result.

For example, the first certificate may include a maximum set of permissions, which are granted by the vehicle owner device, of the second certificate of the peer device signed and issued by the first certificate. Then, the peer device has the permissions in the maximum set of permissions. For example, the maximum set of permissions includes opening a vehicle door, and the peer device may only open the vehicle door by using the digital vehicle key shared by the vehicle owner device. For another example, the maximum set of permissions includes all the permissions owned by the vehicle owner device, and then the peer device may control the vehicle to perform all the operations under the permissions of the vehicle owner device, including but not limited to control operations of an engine of the vehicle.

The above process of signing and issuing the second certificate by the first certificate only involves the interaction between the peer device and the cloud server, and the vehicle owner device does not need to be online synchronously.

Based on the above two independent processes, the present disclosure realizes the asynchronous sharing of the vehicle key certificate, so as to asynchronously share the digital vehicle key to the peer device.

In the above process, the vehicle owner device does not need to be online synchronously with the peer device, so as to realize the asynchronous sharing of the vehicle key certificate, and share the digital vehicle key to the peer device asynchronously, thus improving the success rate of sharing the digital vehicle key and providing high usability.

Next, the method for sharing the digital vehicle key provided by the present disclosure will be introduced on the side of the cloud server of the vehicle.

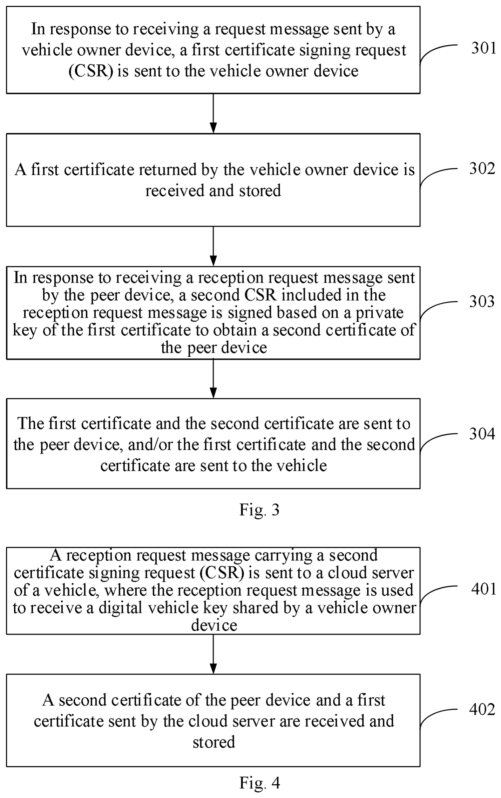

An embodiment of the present disclosure provides a method for sharing a digital vehicle key, referring to Fig. 3, which is a flowchart of a method for sharing a digital vehicle key according to an embodiment. The method may be performed by a cloud server of a vehicle, and may include the following steps.

In step 301, in response to receiving a request message sent by a vehicle owner device, a first certificate signing request (CSR) is sent to the vehicle owner device.

In an embodiment of the present disclosure, the request message is used to request initiate digital vehicle key sharing.

In an embodiment of the present disclosure, the cloud server may immediately respond to the request message of the vehicle owner device and send the first CSR to the vehicle owner device.

In an example, the cloud server generates a public key of a first certificate and a private key of the first certificate based on the request message, and sign the public key of the first certificate and business information based on the private key of the first certificate to obtain the first CSR. The business information includes, but is not limited to, business information related to sharing the digital vehicle key.

The first CSR is initiated by the cloud server, and includes the relevant information of the cloud server.

In step 302, a first certificate returned by the vehicle owner device is received and stored.

In an embodiment of the present disclosure, the first certificate is obtained by the vehicle owner device signing the first CSR based on a private key of its own vehicle key certificate. The first certificate includes not only the relevant information of the cloud server, but also the relevant information of the vehicle owner device. For example, the first certificate may include digital vehicle key information shared by the vehicle owner device to the peer device.

In an embodiment of the present disclosure, the cloud server may store the first certificate after receiving the first certificate returned by the vehicle owner device.

The above steps 301 to 302 only involve the interaction between the vehicle owner device and the cloud server, without the need for the peer device to be online synchronously.

In step 303, in response to receiving a reception request message sent by the peer device, a second CSR included in the reception request message is signed based on a private key of the first certificate to obtain a second certificate of the peer device.

In an embodiment of the present disclosure, the peer device may send the reception request message to the cloud server when the peer device is online, and the reception request message is used to receive the digital vehicle key shared by the vehicle owner device. The reception request message carries the second CSR initiated by the peer device.

The cloud server may immediately respond to the reception request message of the peer device, and sign the second CSR included in the reception request message based on the private key of the first certificate to obtain the second certificate of the peer device. In an example, after receiving the reception request message of the peer device, the cloud server may verify an identity of the peer device, and if a verification result is successful, sign the second CSR included in the reception request message based on the private key of the first certificate to obtain the second certificate of the peer device.

In step 304, the first certificate and the second certificate are sent to the peer device, and/or the first certificate and the second certificate are sent to the vehicle.

In an example, the cloud server may send the first certificate and the second certificate to the peer device through network connection with the peer device.

In an embodiment of the present disclosure, the process of sending the first certificate and the second certificate to the peer device in the above steps 303 and 304 only involves the interaction between the cloud server and the peer device, without the need for the vehicle owner device to be online synchronously, thus achieving the purpose of asynchronous sharing of the digital vehicle key.

Subsequently, the peer device may send the first certificate and the second certificate to the vehicle through short-range communication, so that the vehicle may verify whether the peer device is a trusted device. Specifically, the vehicle may first verify the first certificate based on the vehicle key certificate of the vehicle owner device, and then verify the second certificate based on the first certificate after the first certificate passes verification, so as to determine whether the second certificate is a trusted certificate. Further, after the vehicle determines that the second certificate is the trusted certificate, the second certificate may be included in a trusted certificate library. After the peer device approaches the vehicle and completes the identity verification or other relevant verifications with the vehicle, the vehicle may determine that the peer device is the trusted device. For example, the short-range communication includes, but is not limited to, Bluetooth, Near Field Communication (NFC), infrared, ZigBee or the like.

For example, if the vehicle is located in an underground garage or other places with poor network signals, the cloud server may send the first certificate and the second certificate to the peer device in advance through the network connection with the peer device. After the peer device approaches the vehicle, it may send the first certificate and the second certificate to the vehicle through the short-range communication. The vehicle first verifies the first certificate based on the vehicle key certificate of the vehicle owner device, and then verifies the second certificate based on the first certificate after the first certificate passes verification, to determine whether the second certificate is the trusted certificate. Further, after the vehicle determines that the second certificate is the trusted certificate, the second certificate may be included in the trusted certificate library. After the peer device approaches the vehicle and completes the identity verification or other relevant verifications with the vehicle, the vehicle may determine that the peer device is the trusted device. In an example, the cloud server may send the first certificate and the second certificate to the vehicle through network connection with the vehicle, so that the vehicle may verify whether the second certificate is a trusted certificate. Specifically, the vehicle may first verify the first certificate based on the vehicle key certificate of the vehicle owner device, and then verify the second certificate based on the first certificate after the first certificate passes verification, so as to determine whether the second certificate is the trusted certificate. Further, after the vehicle determines that the second certificate is the trusted certificate, the second certificate may be included in the trusted certificate library. After the peer device approaches the vehicle and completes the identity verification or other relevant verifications with the vehicle, the vehicle may determine that the peer device is the trusted device.

For example, if the network signal of the vehicle is good, the cloud server may directly send the first certificate and the second certificate to the vehicle through the network connection with the vehicle, and the vehicle may determine whether the peer device is the trusted device in the above way, which is not repeated here.

In this way, the verification process of whether the second certificate is the trusted certificate may be completed in advance before the peer device approaches the vehicle, and after the peer device approaches the vehicle, the vehicle may quickly complete the identity verification or other relevant verifications, so as to determine whether the peer device is the trusted device, thus improving the efficiency of the peer device controlling the vehicle to perform corresponding operations by using the digital vehicle key shared by the vehicle owner device, and providing high usability.

In an example, the cloud server may send the first certificate and the second certificate to the peer device, and also send the first certificate and the second certificate to the vehicle, so as to realize asynchronous sharing of the digital vehicle key, and also improve the efficiency of the peer device controlling the vehicle to perform corresponding operations by using the digital vehicle key shared by the vehicle owner device, and provide high usability.

In an example, the vehicle may receive the first certificate and the second certificate sent by the cloud server through network connection between the cloud server and the vehicle.

In an example, the vehicle may receive the first certificate and the second certificate sent by the peer device through short-range communication.

In an example, the vehicle may receive the first certificate and the second certificate sent by the cloud server through network connection between the cloud server and the vehicle, and also receive the first certificate and the second certificate sent by the peer device through short-range communication.

In an embodiment of the present disclosure, since the vehicle has been paired with the vehicle owner device in advance, the vehicle determines that the vehicle owner device is a trusted equipment, and the vehicle has included the vehicle key certificate of the vehicle owner device in the trusted certificate library in advance. The vehicle may verify the first certificate based on the vehicle key certificate of the vehicle owner device.

The certificate verification process may include: verifying the signature of the first certificate, and determining whether the first certificate is signed and issued by the vehicle owner device, and if it is determined that the first certificate is signed and issued by the vehicle owner device, the verification is passed.

If the verification on the second certificate by the vehicle is passed, the vehicle determines that the second certificate is the trusted certificate, and the second certificate is included in the trusted certificate library. Further, when the peer device approaches the vehicle, the vehicle may determine that the peer device is the trusted device.

After determining that the peer device is the trusted device, the peer device may use a private key of the stored second certificate to perform encryption and/or signing operations, complete the authentication with the vehicle, and control the vehicle to perform corresponding operations based on a successful authentication result, for example, controlling the vehicle to open or close the door, start or stop the engine, open or close the window, etc.

In the above embodiment, the cloud server may interact with the vehicle owner device to obtain the first certificate, and this process does not need the peer device to be online synchronously. Further, the cloud server may interact with the peer device, sign and issue the second certificate of the peer device, and provide the first certificate and the second certificate to the peer device and/or the vehicle, and this process does not need the vehicle owner device to be online synchronously. The asynchronous sharing of the digital vehicle key is completed, which improves the efficiency of the peer device controlling the vehicle to perform corresponding operations by using the digital vehicle key shared by the vehicle owner device, and provides high usability.

Next, the method for sharing the digital vehicle key provided by the present disclosure will be introduced on the side of the peer device.

An embodiment of the present disclosure provides a method for sharing a digital vehicle key, referring to Fig. 4, which is a flowchart of a method for sharing a digital vehicle key according to an embodiment. The method may be performed by a peer device, and the peer device refers to a terminal supported by a friend (the friend in the present disclosure refers to a user to which the vehicle owner agrees to share the digital vehicle key), including but not limited to a smart phone, a notebook computer, a desktop computer, a tablet computer, an intelligent wearable device, etc. The method includes the following steps.

In step 401, a reception request message carrying a second certificate signing request (CSR) is sent to a cloud server of a vehicle, where the reception request message is used to receive a digital vehicle key shared by a vehicle owner device.

When the peer device is online, if it is determined that a link of the vehicle owner device sharing the digital vehicle key is received, for example, a link sent by the vehicle owner device through WeChat, Short Message Service (SMS), etc., the reception request message carrying the second certificate signing request (CSR) may be sent to the cloud server of the vehicle. The reception request message is used to receive the digital vehicle key shared by the vehicle owner device. Since the second CSR is initiated by the peer device, it includes the relevant information of the peer device.

In step 402, a second certificate of the peer device and a first certificate sent by the cloud server are received and stored.

In an embodiment of the present disclosure, the first certificate is a digital vehicle key certificate pre-stored in the cloud server by the vehicle owner device, and the first certificate includes digital vehicle key information shared by the vehicle owner device to the peer device.

In a possible implementation, the first certificate may include a maximum set of permissions, which are granted by the vehicle owner device, of the second certificate of the peer device signed and issued by the first certificate.

For example, the maximum set of permissions includes a plurality of permissions of the vehicle owner device, that is, the permissions owned by the vehicle owner device are granted to the peer device.

For example, in order to reduce security risks, the maximum set of permissions includes part of the permissions owned by the vehicle owner device, which do not involve control operations of an engine. For example, the maximum set of permissions includes opening a vehicle door, opening a trunk and so on.

In an embodiment of the present disclosure, the second certificate is a digital vehicle key certificate obtained by the cloud server signing the second CSR based on a private key of the first certificate.

In an example, after the cloud server has sent the first certificate and the second certificate to the vehicle through network connection with the vehicle, and the vehicle has completed the authentication of the second certificate, that is, the second certificate has been included in a trusted certificate library, it may be further determined whether the peer device is a trusted device.

The peer device stores the first certificate and the second certificate, and when the peer device approaches the vehicle, it may use a private key of the stored second certificate for encryption and/or signing operations to complete the authentication with the vehicle, and control the vehicle to perform corresponding operations based on a successful authentication result, for example, controlling the vehicle to open or close the door, start or stop the engine, open or close the window, etc.

In another example, after receiving and storing the first certificate and the second certificate, the peer device may send the first certificate and the second certificate to the vehicle through short-range communication when the peer device approaches the vehicle, so that the vehicle may verify whether the second certificate is a trusted certificate, and subsequently may verify whether the peer device is a trusted device. The short-range communication includes, but is not limited to, Bluetooth, infrared, NFC, ZigBee, etc.

After the vehicle verifies that the second certificate is the trusted certificate, the second certificate may also be included in the trusted certificate library. After the vehicle determines that the peer device is the trusted device, the peer device may perform encryption and/or signing operations through a private key of the second certificate to complete the authentication with the vehicle, and control the vehicle to perform the corresponding operations based on the successful authentication result.

For example, the first certificate may include a maximum set of permissions, which are granted by the vehicle owner device, of the second certificate of the peer device signed and issued by the first certificate. Then, the peer device has the permissions in the maximum set of permissions. For example, the maximum set of permissions includes opening a vehicle door, and the peer device may only open the vehicle door by using the digital vehicle key shared by the vehicle owner device. For another example, the maximum set of permissions includes all the permissions owned by the vehicle owner device, and then the peer device may control the vehicle to perform all the operations under the permissions of the vehicle owner device, including but not limited to control operations of an engine of the vehicle.

In the above embodiment, the peer device may obtain the first certificate and the second certificate of the peer device from the cloud server of the vehicle, and this process does not need the vehicle owner device to be online synchronously, so that the asynchronous sharing of the vehicle key certificate is realized, and hence the digital vehicle key may be shared to the peer device asynchronously, thus improving the success rate of sharing the digital vehicle key and providing high usability.

Next, the method for sharing the digital vehicle key provided by the present disclosure will be introduced on the side of the vehicle.

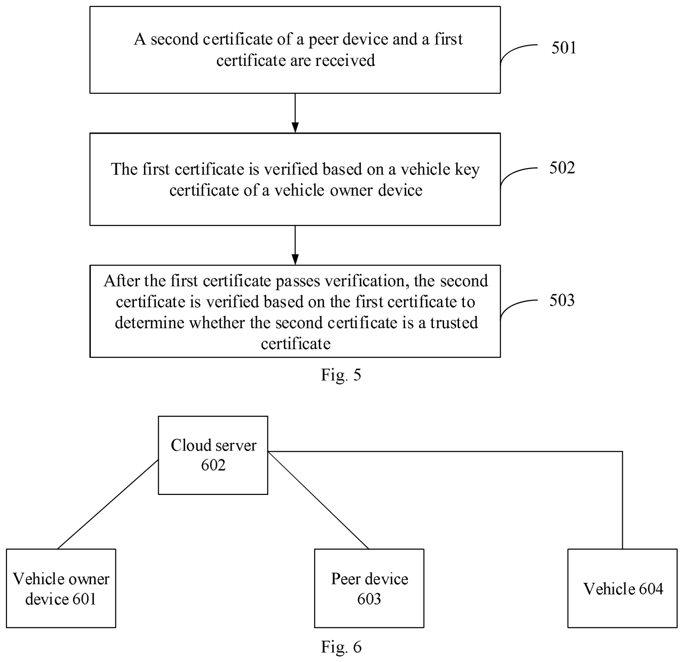

An embodiment of the present disclosure provides a method for sharing a digital vehicle key, referring to Fig. 5, which is a flowchart of a method for sharing a digital vehicle key according to an embodiment. The method may be performed by a vehicle, and may include the following steps.

In step 501, a second certificate of a peer device and a first certificate are received.

The first certificate is a digital vehicle key certificate pre-stored in a cloud server of the vehicle by a vehicle owner device, and the first certificate includes digital vehicle key information shared by the vehicle owner device to a peer device.

In a possible implementation, the first certificate may include a maximum set of permissions, which are granted by the vehicle owner device, of the second certificate of the peer device signed and issued by the first certificate.

For example, the maximum set of permissions includes a plurality of permissions of the vehicle owner device, that is, the permissions owned by the vehicle owner device are granted to the peer device.

For example, in order to reduce security risks, the maximum set of permissions includes part of the permissions owned by the vehicle owner device, which do not involve control operations of an engine. For example, the maximum set of permissions includes opening a vehicle door, opening a trunk and so on.

In an example, the vehicle may receive the first certificate and the second certificate sent by the cloud server through network connection between the cloud server and the vehicle.

In an example, the vehicle may receive the first certificate and the second certificate sent by the peer device through short-range communication.

In an example, the vehicle may receive the first certificate and the second certificate sent by the cloud server through network connection between the cloud server and the vehicle, and also receive the first certificate and the second certificate sent by the peer device through short-range communication.

The signing and issuing processes of the first certificate and the second certificate have been introduced on the side of the vehicle owner device and on the side of the peer device, and will not be repeated here. It should be noted that in the process of signing and issuing the first certificate by the vehicle owner device, the peer device does not need to be online synchronously. The second certificate of the peer device is signed and issued by the cloud server, and the vehicle owner device does not need to be online synchronously during the signing and issuing process, thus realizing the asynchronous sharing of the vehicle key certificate.

In step 502, the first certificate is verified based on a vehicle key certificate of a vehicle owner device.

In an embodiment of the present disclosure, since the vehicle has been paired with the vehicle owner device in advance, the vehicle determines that the vehicle owner device is a trusted device, and the vehicle has included the vehicle key certificate of the vehicle owner device in a trusted certificate library in advance. The vehicle may verify the first certificate based on the vehicle key certificate of the vehicle owner device.

The certificate verification process may include: verifying the signature of the first certificate, and determining whether the first certificate is signed and issued by the vehicle owner device, and if it is determined that the first certificate is signed and issued by the vehicle owner device, the verification is passed.

In step 503, after the first certificate passes verification, the second certificate is verified based on the first certificate to determine whether the second certificate is a trusted certificate.

In an embodiment of the present disclosure, the cloud server signs a public key of the first certificate and business information based on a private key of the first certificate to obtain a first CSR, and the vehicle owner device signs the first CSR based on a private key of the vehicle key certificate of the vehicle owner device to obtain the first certificate. Thus, the public key of the first certificate may be obtained after the verification on the first certificate by the vehicle is passed. The vehicle may verify whether the second certificate is signed and issued by the first certificate, and the verification process is similar to the above verification process for the first certificate, and thus will not be repeated here.

If the verification on the second certificate by the vehicle is passed, the vehicle determines that the second certificate is a trusted certificate, and the second certificate is included in the trusted certificate library. Further, when the peer device approaches the vehicle, the vehicle may determine that the peer device is a trusted device.

After determining that the peer device is the trusted device, the peer device may use a private key of the stored second certificate to perform encryption and/or signing operations, complete the authentication with the vehicle, and control the vehicle to perform corresponding operations based on a successful authentication result, for example, controlling the vehicle to open or close the door, start or stop the engine, open or close the window, etc.

In the above embodiment, the vehicle may first verify the first certificate based on the vehicle key certificate of the vehicle owner device, and then verify the second certificate of the peer device based on the first certificate after the first certificate passes verification, so as to determine whether the second certificate is the trusted certificate, thus realizing asynchronous sharing of the vehicle key certificate, and hence sharing the digital vehicle key to the peer device asynchronously, which provides high usability.

In some optional embodiments, referring to Fig. 6, which is an architecture diagram of a system for sharing a digital vehicle key according to an embodiment, the system includes: a vehicle owner device 601 used to execute the steps of sharing the digital vehicle key shown in Fig. 2; a cloud server 602 of a vehicle used to execute the steps of sharing the digital vehicle key shown in Fig. 3; a peer device 603 used to execute the steps of sharing the digital vehicle key shown in Fig. 4; and a vehicle 604 used to execute the steps of sharing the digital vehicle key shown in Fig. 5.

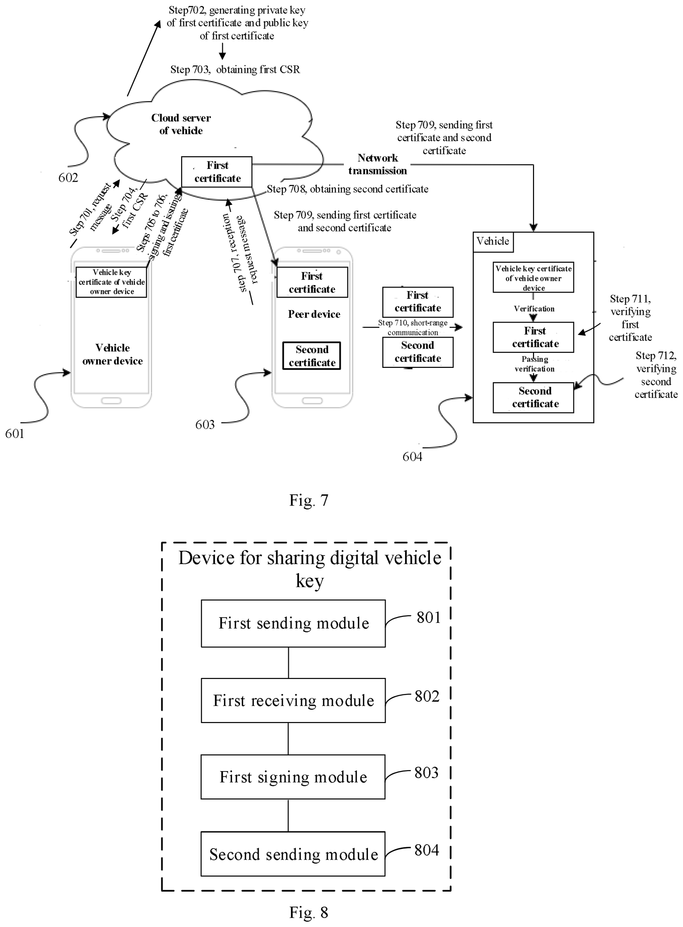

In some alternative embodiments, referring to fig. 7, which is a flowchart of a method for sharing a digital vehicle key according to an embodiment, the method may be performed by the system shown in Fig. 6, and the method includes the following steps.

In step 701, the vehicle owner device 601 sends a request message to the cloud server 602 of the vehicle, where the request message is used to request to initiate digital vehicle key sharing.

In step 702, the cloud server 602 generates a private key of a first certificate and a public key of the first certificate.

In step 703, the cloud server 602 signs the public key of the first certificate and business information based on the private key of the first certificate to obtain a first CSR.

In step 704, the cloud server 602 sends the first CSR to the vehicle owner device 601.

In step 705, the vehicle owner device 601 signs the first CSR based on a private key of a vehicle key certificate of the vehicle owner device 601 to obtain a first certificate.

In step 706, the vehicle owner device 601 stores the first certificate in the cloud server 602.

In step 707, the peer device 603 sends a reception request message carrying a second CSR to the cloud server 602, where the reception request message is used to receive a digital vehicle key shared by the vehicle owner device 601.

In step 708, the cloud server 602 signs the second CSR included in the reception request message based on the private key of the first certificate to obtain a second certificate of the peer device 603.

In step 709, the cloud server 602 sends the first certificate and the second certificate to the peer device 603, and/or sends the first certificate and the second certificate to the vehicle 604 through network connection with the vehicle 604.

In step 710, the peer device 603 sends the first certificate and the second certificate to the vehicle 604.

Step 710 is an optional step. If the cloud server 602 has sent the first certificate and the second certificate to the vehicle 604, step 710 may not be executed.

In step 711, the vehicle 604 verifies the first certificate based on the vehicle key certificate of the vehicle owner device 601.

In step 712, after the verification on the first certificate by the vehicle 604 is passed, the vehicle 604 verifies the second certificate based on the first certificate to determine whether the second certificate is a trusted certificate.

In the present disclosure, after the vehicle 604 determines that the second certificate is the trusted certificate, the vehicle 604 includes the second certificate in the trusted certificate library. Further, when the peer device 603 approaches the vehicle 604, the vehicle 604 may determine whether the peer device 603 is a trusted device. Further, after the vehicle 604 determines that the peer device 603 is the trusted device, the peer device 603 may use a private key of the second certificate to perform encryption and/or signing operations, complete the authentication with the vehicle, and control the vehicle 604 to perform corresponding operations based on a successful authentication result. The operations include, but are not limited to, control operations of the engine, door, window, air conditioner and the like of the vehicle.

In the above embodiment, the asynchronous sharing of the vehicle key certificate is realized, and the digital vehicle key may be asynchronously shared to the peer device, so that the success rate of sharing the digital vehicle key is improved and the usability is high.

It should also be noted that the present disclosure does not limit the digital key specification scenarios to which the above scheme applies, and the digital key specification may include, but not limited to, at least one of: car connectivity consortium (CCC), intelligent car connectivity open alliance (ICCOA) specifications or other digital key specifications.

Corresponding to the aforementioned embodiments of methods realizing application functions, the present disclosure also provides embodiments of devices realizing application functions.

Referring to Fig. 8, Fig. 8 is a block diagram of a device for sharing a digital vehicle key according to an illustrative embodiment, and the device is for a vehicle owner device and includes: a first sending module 801 configured to send a request message to a cloud server of a vehicle, where the request message is configured to request to initiate digital vehicle key sharing; a first receiving module 802 configured to receive a first certificate signing request (CSR) returned by the cloud server; a first signing module 803 configured to sign the first CSR based on a private key of a vehicle key certificate of the vehicle owner device to obtain a first certificate, where the first certificate includes digital vehicle key information shared by the vehicle owner device to a peer device; and a second sending module 804 configured to store the first certificate in the cloud server.

The specific implementations are similar to the implementations of the embodiment shown in Fig. 2, and will not be repeated here.

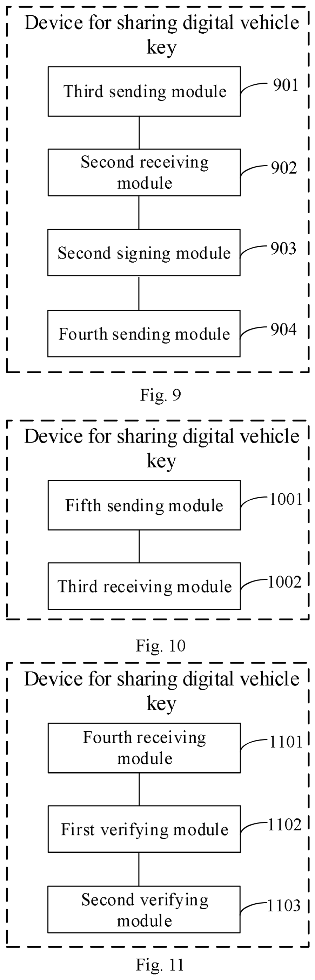

Referring to Fig. 9, Fig. 9 is a block diagram of a device for sharing a digital vehicle key according to an illustrative embodiment, and the device is for a cloud server of a vehicle, and includes: a third sending module 901 configured to send a first certificate signing request (CSR) to a vehicle owner device in response to receiving a request message sent by the vehicle owner device, where the request message is configured to request to initiate digital vehicle key sharing; a second receiving module 902 configured to receive and store a first certificate returned by the vehicle owner device, where the first certificate is obtained by signing the first CSR based on a private key of a vehicle key certificate of the vehicle owner device, and the first certificate includes digital vehicle key information shared by the vehicle owner device to a peer device; a second signing module 903 configured to, in response to receiving a reception request message sent by the peer device, sign a second CSR contained in the reception request message based on a private key of the first certificate to obtain a second certificate of the peer device, where the reception request message is configured to receive a digital vehicle key shared by the vehicle owner device; and a fourth sending module 904 configured to send the first certificate and the second certificate to the peer device, and/or send the first certificate and the second certificate to the vehicle.

Optionally, the device further includes (not shown in Fig. 9): a generating module configured to generate a public key of the first certificate and the private key of the first certificate; and a third signing module configured to sign the public key of the first certificate and business information based on the private key of the first certificate to obtain the first CSR.

Optionally, the device further includes (not shown in Fig. 9): a third verifying module configured to verify an identity of the peer device, where a verification result is successful.

Optionally, the fourth sending module 904 is further configured to: send the first certificate and the second certificate to the vehicle through network connection with the vehicle.

The specific implementations are similar to the implementations of the embodiment shown in Fig. 3, and will not be repeated here.

Referring to Fig. 10, Fig. 10 is a block diagram of a device for sharing a digital vehicle key according to an illustrative embodiment, and the device is for a peer device and includes: a fifth sending module 1001 configured to send a reception request message carrying a second certificate signing request (CSR) to a cloud server of a vehicle, where the reception request message is configured to receive a digital vehicle key shared by a vehicle owner device; and a third receiving module 1002 configured to receive and store a second certificate of the peer device and a first certificate sent by the cloud server, where the first certificate is a digital vehicle key certificate pre-stored in the cloud server by the vehicle owner device, the first certificate includes digital vehicle key information shared by the vehicle owner device to the peer device, and the second certificate is a digital vehicle key certificate obtained by the cloud server signing the second CSR based on a private key of the first certificate.

Optionally, the fifth sending module 1001 is further configured to: send the first certificate and the second certificate to the vehicle by short-range communication.

The specific implementations are similar to the implementations of the embodiments shown in Fig. 4, and will not be repeated here.

Referring to Fig. 11, Fig. 11 is a block diagram of a device for sharing a digital vehicle key according to an illustrative embodiment, and the device is for a vehicle and includes: a fourth receiving module 1101 configured to receive a second certificate of a peer device and a first certificate, where the first certificate is a digital vehicle key certificate pre-stored in a cloud server of the vehicle by a vehicle owner device, and the first certificate includes digital vehicle key information shared by the vehicle owner device to the peer device; a first verifying module 1102 configured to verify the first certificate based on a vehicle key certificate of the vehicle owner device; and a second verifying module 1103 configured to verify the second certificate based on the first certificate after the first certificate passes verification, to determine whether the second certificate is a trusted certificate.

Optionally, the fourth receiving module 1101 is further configured to: receive the first certificate and the second certificate sent by the cloud server through network connection between the cloud server and the vehicle; and/or receive the first certificate and the second certificate sent by the peer device through short-range communication.

The specific implementations are similar to the implementations of the embodiment shown in Fig. 5, and will not be repeated here.

For the device embodiments, since they basically correspond to the method embodiments, it is only necessary to refer to part of the descriptions of the method embodiments for the relevant points. The device embodiments described above are only schematic, where the units described above as separate components may or may not be physically separated, and the components displayed as units may or may not be physical units, that is, they may be located in one place or distributed to multiple network units. Some or all of the modules may be selected according to actual needs to achieve the purpose of the scheme of the present disclosure. Those ordinary skilled in the related art may understand and implement them without creative labor.

Correspondingly, the present disclosure also provides a computer-readable storage medium, the storage medium stores a computer program, and the computer program is used to perform any of the above methods for sharing the digital vehicle key.

Correspondingly, the present disclosure also provides a device for sharing the digital vehicle keys, which includes: a processor; and a memory configured to store instructions executable by the processor. The processor is configured to perform the method for sharing the digital vehicle key on the side of the vehicle owner device or on the side of the peer device.

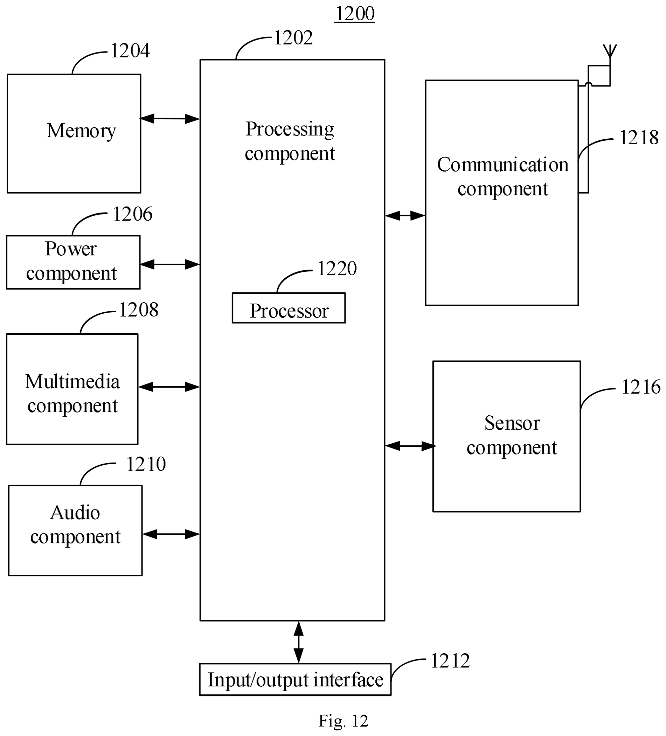

Fig. 12 is a block diagram of a device 1200 for sharing a digital vehicle key according to an illustrative embodiment. For example, the device 1200 may be a mobile phone, a tablet computer, an e-book reader, a multimedia player, a wearable device, a vehicle-mounted user equipment, an ipad, a smart TV and other terminals. The terminal may be used as the vehicle owner device and/or the peer device.

Referring to Fig. 12, the device 1200 may include one or more of the following components: a processing component 1202, a memory 1204, a power component 1206, a multimedia component 1208, an audio component 1210, an input/output (I/) interface 1212, a sensor component 1216, and a communication component 1218.

The processing component 1202 generally controls the overall operations of the device 1200, such as operations associated with display, telephone call, data of sharing the digital vehicle key, camera operation and recording operation. The processing component 1202 may include one or more processors 1220 to execute instructions to complete all or part of the steps of the methods for sharing the digital vehicle key described above. In addition, the processing component 1202 may include one or more modules to facilitate interaction between the processing component 1202 and other components. For example, the processing component 1202 may include a multimedia module to facilitate interaction between the multimedia component 1208 and the processing component 1202. As another example, the processing component 1202 may read the executable instructions from the memory to realize the steps of the methods for sharing the digital vehicle key provided by the above embodiments.

The memory 1204 is configured to store various types of data to support operations at the device 1200. Examples of these data include instructions for any application or method operating on the device 1200, contact data, phone book data, messages, pictures, videos, and the like. The memory 1204 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1206 provides power to various components of the device 1200. The power component 1206 may include a power management system, one or more power supplies, and other components associated with generating, managing and distributing power for the device 1200.

The multimedia component 1208 includes a display screen that provides an output interface between the device 1200 and the user. In some embodiments, the multimedia component 1208 includes a front camera and/or a rear camera. When the device 1200 is in an operation mode, such as a shooting mode or a video mode, the front camera and/or the rear camera may receive external multimedia data. Each front camera and rear camera may be a fixed optical lens system or have a focal length and an optical zoom capability.

The audio component 1210 is configured to output and/or input audio signals. For example, the audio component 1210 includes a microphone (MIC) configured to receive external audio signals when the device 1200 is in operation modes, such as a call mode, a recording mode and a voice recognition mode. The received audio signal may be further stored in the memory 1204 or transmitted via the communication component 1218. In some embodiments, the audio component 1210 further includes a speaker for outputting audio signals.

The I/O interface 1212 provides an interface between the processing component 1202 and peripheral interface modules, and the peripheral interface modules may be keyboards, click wheels, buttons, etc. These buttons may include, but are not limited to, a home button, a volume button, a start button and a lock button.

The sensor assembly 1216 includes one or more sensors for providing various aspects of state evaluation for the device 1200. For example, the sensor component 1216 may detect the on/off state of the device 1200, the relative positioning of components, such as the display and keypad of the device 1200, the position change of the device 1200 or a component of the device 1200, the presence or absence of user contact with the device 1200, the orientation or acceleration/deceleration of the device 1200 and the temperature change of the device 1200. The sensor assembly 1216 may include a proximity sensor configured to detect the presence of a nearby object without any physical contact. The sensor assembly 1216 may also include an optical sensor, such as a CMOS or CCD image sensor, for use in imaging applications. In some embodiments, the sensor assembly 1216 may further include an acceleration sensor, a gyro sensor, a magnetic sensor, a pressure sensor or a temperature sensor.

The communication component 1218 is configured to facilitate wired or wireless communication between the device 1200 and other devices. The device 1200 may access a wireless network based on communication standards, such as Wi-Fi, 2G, 3G, 4G, 5G or 6G, or a combination thereof. In an illustrative embodiment, the communication component 1218 receives a broadcast signal or broadcast related information from an external broadcast management system via a broadcast channel. In an illustrative embodiment, the communication component 1218 further includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology and other technologies.

In an illustrative embodiment, the device 1200 may be realized by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, for performing the method for sharing the digital vehicle key on the side of the peer device or on the side of the vehicle owner device.

Correspondingly, the present disclosure also provides a device for sharing a digital vehicle key, which includes: a processor; and a memory for storing instructions executable by the processor. The processor is configured to perform the method for sharing the digital vehicle key on the side of the cloud server of the vehicle.

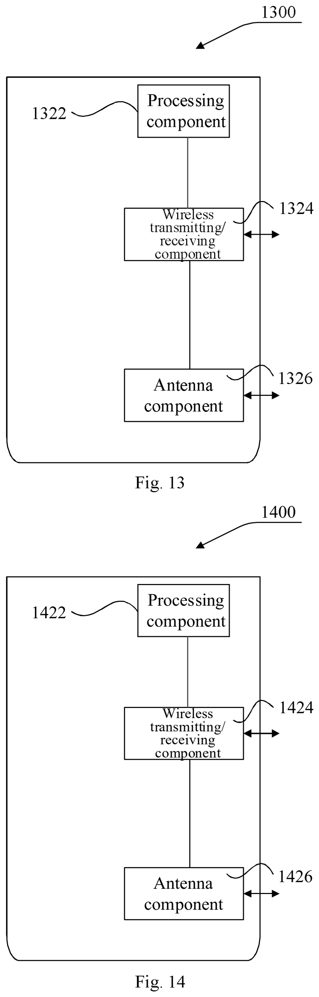

As shown in Fig. 13, Fig. 13 is a schematic diagram of a device 1300 for sharing a digital vehicle key according to an illustrative embodiment, and the device 1300 may be provided as a server. Referring to Fig. 13, the device 1300 includes a processing component 1322, a wireless transmitting/receiving component 1324, an antenna component 1326, and a signal processing part unique to a wireless interface, and the processing component 1322 may further include at least one processor.

One of the processors in the processing component 1322 may be configured to perform any of the above methods for sharing the digital vehicle key.

Correspondingly, the present disclosure also provides a device for sharing a digital vehicle key, which includes: a processor; and a memory for storing instructions executable by the processor. The processor is configured to perform the method for sharing the digital vehicle key on the side of the vehicle.

As shown in Fig. 14, fig. 14 is a schematic diagram of a device 1400 for sharing a digital vehicle key according to an illustrative embodiment, and the device 1400 may be provided as a vehicle. Referring to Fig. 14, the device 1400 includes a processing component 1422, a wireless transmitting/receiving component 1424, an antenna component 1426, and a signal processing part unique to a wireless interface, and the processing component 1422 may further include at least one processor.

One of the processors in the processing component 1422 may be configured to perform any of the above methods for sharing the digital vehicle key.

Other embodiments of the present disclosure will easily occur to those skilled in the related art after they consider the specification and practice the invention disclosed herein. The present disclosure is intended to cover any variations, uses or adaptations of the present disclosure, which follow the general principles of the present disclosure and include common sense or common technical means in the related art that are not disclosed in the present disclosure. The specification and embodiments are to be regarded as illustrative only, with the true scope and spirit of the present disclosure being indicated by the following claims.

It should be understood that the present disclosure is not limited to the precise structure described above and shown in the drawings, and various modifications and changes may be made without departing from the scope of the present disclosure. The scope of the present disclosure is limited only by the appended claims.

## Claims

1. A method for sharing a digital vehicle key, performed by a vehicle owner device, comprising:
sending a request message to a cloud server of a vehicle, wherein the request message is configured to request to initiate digital vehicle key sharing;
receiving a first certificate signing request (CSR) returned by the cloud server;
signing the first CSR based on a private key of a vehicle key certificate of the vehicle owner device to obtain a first certificate, wherein the first certificate comprises digital vehicle key information shared by the vehicle owner device to a peer device; and
storing the first certificate in the cloud server.

2. A method for sharing a digital vehicle key, performed by a cloud server of a vehicle, comprising:
in response to receiving a request message sent by a vehicle owner device, sending a first certificate signing request (CSR) to the vehicle owner device, wherein the request message is configured to request to initiate digital vehicle key sharing;
receiving and storing a first certificate returned by the vehicle owner device, wherein the first certificate is obtained by signing the first CSR based on a private key of a vehicle key certificate of the vehicle owner device, and the first certificate comprises digital vehicle key information shared by the vehicle owner device to a peer device;
in response to receiving a reception request message sent by the peer device, signing a second CSR contained in the reception request message based on a private key of the first certificate to obtain a second certificate of the peer device, wherein the reception request message is configured to receive a digital vehicle key shared by the vehicle owner device; and
sending the first certificate and the second certificate to the peer device, and/or sending the first certificate and the second certificate to the vehicle.

3. The method according to claim 2, further comprising:
generating a public key of the first certificate and the private key of the first certificate; and
signing the public key of the first certificate and business information based on the private key of the first certificate to obtain the first CSR.

4. The method according to claim 2, wherein before obtaining the second certificate, the method further comprises:
verifying an identity of the peer device, wherein a verification result is successful.

5. The method according to claim 2, wherein sending the first certificate and the second certificate to the vehicle comprises:
sending the first certificate and the second certificate to the vehicle through network connection with the vehicle.

6. A method for sharing a digital vehicle key, performed by a peer device, comprising:
sending a reception request message carrying a second certificate signing request (CSR) to a cloud server of a vehicle, wherein the reception request message is configured to receive a digital vehicle key shared by a vehicle owner device; and
receiving and storing a second certificate of the peer device and a first certificate sent by the cloud server, wherein the first certificate is a digital vehicle key certificate pre-stored in the cloud server by the vehicle owner device, the first certificate comprises digital vehicle key information shared by the vehicle owner device to the peer device, and the second certificate is a digital vehicle key certificate obtained by the cloud server signing the second CSR based on a private key of the first certificate.

7. The method according to claim 6, further comprising:
sending the first certificate and the second certificate to the vehicle by short-range communication.

8. A method for sharing a digital vehicle key, performed by a vehicle, comprising:
receiving a second certificate of a peer device and a first certificate, wherein the first certificate is a digital vehicle key certificate pre-stored in a cloud server of the vehicle by a vehicle owner device, and the first certificate comprises digital vehicle key information shared by the vehicle owner device to the peer device;
verifying the first certificate based on a vehicle key certificate of the vehicle owner device; and
after the first certificate passes verification, verifying the second certificate based on the first certificate to determine whether the second certificate is a trusted certificate.

9. The method according to claim 8, wherein receiving the second certificate of the peer device and the first certificate comprises:
receiving the first certificate and the second certificate sent by the cloud server through network connection between the cloud server and the vehicle; and/or
receiving the first certificate and the second certificate sent by the peer device through short-range communication.

10. A device for sharing a digital vehicle key, for a vehicle owner device, comprising:
a first sending module configured to send a request message to a cloud server of a vehicle, wherein the request message is configured to request to initiate digital vehicle key sharing;
a first receiving module configured to receive a first certificate signing request (CSR) returned by the cloud server;
a first signing module configured to sign the first CSR based on a private key of a vehicle key certificate of the vehicle owner device to obtain a first certificate, wherein the first certificate comprises digital vehicle key information shared by the vehicle owner device to a peer device; and
a second sending module configured to store the first certificate in the cloud server.

11. A device for sharing a digital vehicle key, for a cloud server of a vehicle, comprising:
a third sending module configured to send a first certificate signing request (CSR) to a vehicle owner device in response to receiving a request message sent by the vehicle owner device, wherein the request message is configured to request to initiate digital vehicle key sharing;
a second receiving module configured to receive and store a first certificate returned by the vehicle owner device, wherein the first certificate is obtained by signing the first CSR based on a private key of a vehicle key certificate of the vehicle owner device, and the first certificate comprises digital vehicle key information shared by the vehicle owner device to a peer device;
a second signing module configured to, in response to receiving a reception request message sent by the peer device, sign a second CSR contained in the reception request message based on a private key of the first certificate to obtain a second certificate of the peer device, wherein the reception request message is configured to receive a digital vehicle key shared by the vehicle owner device; and
a fourth sending module configured to send the first certificate and the second certificate to the peer device, and/or send the first certificate and the second certificate to the vehicle.

12. A device for sharing a digital vehicle key, for a peer device, comprising:
a fifth sending module configured to send a reception request message carrying a second certificate signing request (CSR) to a cloud server of a vehicle, wherein the reception request message is configured to receive a digital vehicle key shared by a vehicle owner device; and
a third receiving module configured to receive and store a second certificate of the peer device and a first certificate sent by the cloud server, wherein the first certificate is a digital vehicle key certificate pre-stored in the cloud server by the vehicle owner device, the first certificate comprises digital vehicle key information shared by the vehicle owner device to the peer device, and the second certificate is a digital vehicle key certificate obtained by the cloud server signing the second CSR based on a private key of the first certificate.

13. A device for sharing a digital vehicle key, for a vehicle, comprising:
a fourth receiving module configured to receive a second certificate of a peer device and a first certificate, wherein the first certificate is a digital vehicle key certificate pre-stored in a cloud server of the vehicle by a vehicle owner device, and the first certificate comprises digital vehicle key information shared by the vehicle owner device to the peer device;
a first verifying module configured to verify the first certificate based on a vehicle key certificate of the vehicle owner device; and
a second verifying module configured to verify the second certificate based on the first certificate after the first certificate passes verification, to determine whether the second certificate is a trusted certificate.

14. A system for sharing a digital vehicle key, comprising:
a vehicle owner device configured to perform the method for sharing the digital vehicle key according to claim 1;
a cloud server of a vehicle configured to perform the method for sharing the digital vehicle key according to any one of claims 2-5;
a peer device configured to perform the method for sharing the digital vehicle key according to any one of claims 6-7; and
a vehicle configured to perform the method for sharing the digital vehicle key according to any one of claims 8-9.

15. A computer-readable storage medium, for storing a computer program configured to perform the method for sharing the digital vehicle key according to any one of claims 1-9.

16. A device for sharing a digital vehicle key, comprising:
a processor; and
a memory configured to store instructions executable by the processor,
wherein the processor is configured to perform the method for sharing the digital vehicle key according to any one of claims 1-9.
